# EUROPÄISCHE PATENTSCHRIFT

(11) **EP 2 162 634 B1**
(45) Veröffentlichungstag und Bekanntmachung des Hinweises auf die Patenterteilung: **27.06.2012**
(21) Anmeldenummer: 08756848.1
(22) Anmeldetag: 02.07.2008
(51) Int. Cl.: F16G 11/04, F16G 11/00

(54) **ANORDNUNG ZUM VERBINDEN EINES LÄNGLICHEN ELEMENTS MIT EINER WEITEREN KOMPONENTE**
ARRANGEMENT FOR CONNECTING AN ELONGATE ELEMENT TO A FURTHER COMPONENT
ENSEMBLE POUR RELIER UN ELEMENT ALLONGE A UN AUTRE COMPOSANT

(30) Priorität: 03.07.2007 AT 10202007
(43) Veröffentlichungstag der Anmeldung: 17.03.2010
(73) Patentinhaber: Teufelberger Gesellschaft M.B.H., 4602 Wels (AT)
(72) Erfinder: KIRTH, Rudolf, A-4860 Vöcklabruck (AT); EBEL, Christoph, A-4654 Bad Wimsbach-Neydharting (AT)
(74) Vertreter: Nemec, Harald
(86) Internationale Anmeldenummer: PCT/AT2008/000239
(87) Internationale Veröffentlichungsnummer: WO 2009/003207

(56) Entgegenhaltungen:
- WO-A-03/008702
- WO-A-2005/054710
- GB-A- 739 055
- GB-A- 2 051 304
- US-A- 3 570 074
- US-A- 4 704 918

## Beschreibung

Die Erfindung betrifft eine Anordnung zum Verbinden eines insbesondere zur Aufnahme und Übertragung von Zug- und/oder Torsionskräften eingesetzten länglichen Elements wie beispielsweise Zugelemente für die Takelage von Segelschiffen oder Torsionswellen mit einer weiteren Komponente.

Ziel der Erfindung ist es insbesondere, eine verbesserte Kraftübertragung insbesondere von Faserverbundwerkstoffen auf ein anderes Material, insbesondere Metall, zu ermöglichen. Ein möglicher Anwendungsbereich hierfür sind Zugelemente für den Segel- oder Surfsport, bei welchen einerseits hohe Kräfte auf das Material einwirken und andererseits die verwendeten Materialien möglichst leicht, aber doch bruchsicher und zäh sein müssen. Zugelemente aus Faserverbünden oder in Form von Faserseilen haben sich für diesen Anwendungsfall als leicht und belastbar herausgestellt. Es gibt zwei prinzipielle Möglichkeiten, die Krafteinleitung in ein solches Element zu verwirklichen:

Einstückig mit dem Zugelement ausgebildete Befestigungsmittel wie endständige Augen sind zur Krafteinleitung gut geeignet, die Herstellung solcher integral gefertigter Zugelemente ist jedoch sehr aufwendig und teuer. Die Länge eines solchen Elements ist mit der Fertigung festgelegt, was eine Einzelstückfertigung für jeden Anwendungsfall bedingt.

Die zweite Möglichkeit ist die Verwendung eines Krafteinleitungselements, das auf die Enden des auf die gewünschte Länge zugeschnittenen Zugelements aufgebracht und mit diesem verbunden werden kann. Dieses Endstück besteht beim Stand der Technik praktisch vollständig aus Metall und weist ein hohes Gewicht auf. Metall wird verwendet, um Anschlusselemente wie z.B. ein Gewinde zu verwirklichen, was mit einem Faserverbundwerkstoff nicht mit ausreichender Festigkeit möglich ist. Es ist dann eine Verbindung zwischen dem Verbundfasermaterial und einem geeignet gestalteten metallischen Element notwendig. Die genannten Werkstoffe sind jedoch nur schwer miteinander verbindbar, weshalb immer wieder Fehlfunktionen durch Materialbrüche auftreten.

Aus der WO 03/008702 A2 ist ein System bekannt, bei welchem eine Zugstange aus mehreren dünnen pultrudierten Einzelstäben zusammengesetzt ist. In einem metallischen Endterminal sind die Stäbe um einen metallischen Kegel herum angeordnet und mit Harz vergossen. Der Kegel wird durch das Einschrauben einer Gegenmutter mit Innengewinde in Position gehalten, in das ein Halteelement eingeschraubt werden kann. Die gesamte Anordnung kann mit Fasern umwunden werden, um der Aufsprengkraft des Kegels entgegenzuwirken.

Nachteilig an diesem bekannten Stand der Technik ist dabei, dass die Kraftübertragung in der Anordnung durch die Verklebung der pultrudierten Stäbe erfolgt. Insbesondere bei starken Zugkräften kann dabei die Haltbarkeit der Verbindung nur dann gewährleistet werden, wenn eine ausreichende Klebelänge vorgesehen wird, was wiederum die Verwendung eines sehr großen und massiven Endstückes bedingt, das - da es aus Metall besteht - ein hohes Gewicht aufweist.

Weiterhin ist aus der WO 2006/012876 A1 ein Verfahren zur Herstellung einer Endverbindung für faserverstärkte Stäbe aus Thermoplastmaterial bekannt, bei welchem eine Stange in eine Buchse gesteckt und soweit erwärmt wird, dass das Matrixmaterial erweicht. Dann wird ein Kegel aus Metall oder auch aus einem Thermoplastmaterial in das Stangenende eingeführt und dieses dadurch aufgeweitet. Die Fasern verlaufen um den Kegel herum und werden dahinter wieder zusammengedrückt. Das Stangenende wird dadurch formschlüssig in dem Endstück fixiert.

Nachteilig an diesem bekannten Stand der Technik ist insbesondere, dass das Verfahren auf die Verwendung eines thermoplastischen Matrixmaterials beschränkt ist und dass auch hier eine schwere metallische Buchse zum Einsatz kommt.

Aus der WO 2004/113760 A1 geht eine Verbindung eines Parallelfaserseils mit einer Buchse hervor. Die Fasern des Seils werden in der kegelförmigen Buchse aus faserverstärktem Kunststoff aufgenommen und von einem Zentralkegel gegen die Buchsenwand gepresst. Die Buchse wird in einem Wickelverfahren auf einem Metallkern hergestellt und besteht aus dem gleichen Fasermaterial, aus dem auch das Seil ist. Im Ausführungsbeispiel gemäß der WO 2004/113760 ist dies PBO-Faser. Der Kegel weist eine rauere Oberfläche auf als die Wandung der Buchse, so dass der Kegel bei Zug am Seil in die Buchse hineingezogen wird. Die Buchse wird ihrerseits mit ihrem hinteren Teil in eine Metallhülse eingeklebt und darin mit einer von hinten einschraubbaren Mutter gegen Herausrutschen gesichert.

Nachteilig an diesem Stand der Technik ist dabei ein hoher Aufwand bei der Fertigung der Verbindung. Zudem besteht die Halterung für die Buchse aus Metall und weist daher ein hohes Gewicht auf.

Weitere Verbindungsanordnungen sind aus den Dokumenten DE 100 10 564 C1, aus der WO 95/29308 A1, der US 6,886,484 B1, der DE 39 42 535 A1, der DE 40 30 319 A1, der GB 2091770, der US 4,755, 076, der FR 376 395 A, der US 4,704,918 und der US 4,260,332 bekannt.

Die WO 04/28731 beschreibt die Herstellung von strukturierten, mit Vorsprüngen versehenen Oberflächen mittels eines Elektronenbestrahlungsverfahrens.

Es ist Aufgabe der Erfindung, eine Anordnung zur Verbindung eines länglichen Elements mit einer weiteren Komponente anzugeben, welche eine haltbare und hochbelastbare, formschlüssige Verbindung zwischen dem länglichen Element und der weiteren Komponente ermöglicht. Eine weitere entscheidende Aufgabe der Erfindung besteht darin, zur Gewichtsreduktion beizutragen.

Die Aufgabe wird erfindungsgemäß dadurch gelöst, dass ein Krafteinleitungselement mit einer der weiteren Komponente zugewandten und einer der weiteren Komponente abgewandten Seite und ein Ummantelungselement mit geschlossenem Querschnitt vorgesehen ist, welches das Krafteinleitungselement zumindest abschnittsweise ummantelt und das Krafteinleitungselement auf dessen von der weiteren Komponente abgewandten Seite überragt, wobei auf zumindest einem Abschnitt des Krafteinleitungselementes an seiner dem Ummantelungselement zugewandten Außenfläche Vorsprünge vorgesehen sind, die das Ummantelungselement zumindest teilweise durchdringen. Das Ummantelungselement besteht dabei im wesentlichen aus einem Faserverbundmaterial, dessen Faserstruktur im Flecht- oder Wickelverfahren hergestellt wird, wobei die im Faserverbundmaterial enthaltenen Fasern in durchlaufender Form zumindest teilweise in den zwischen den Vorsprüngen gebildeten Bereichen liegen. Die Vorsprünge liegen zumindest in einem Bereich des Krafteinleitungselementes in einer dichten regelmäßigen Anordnung vor und das Verhältnis zwischen Höhe der Vorsprünge und Durchmesser der Vorsprünge ist 3 und mehr. Die Vorsprünge sind stiftförmig ausgebildet.

Die vorliegende Erfindung stellt somit ein völlig neues Konzept zur Verbindung von verschiedenartigsten länglichen Elementen mit einer weiteren Komponente zur Verfügung. Durch die Kombination einer mit Vorsprüngen besetzten Oberfläche des Krafteinleitungselementes einerseits mit einem im Wesentlichen aus einem Faserverbundmaterial bestehenden Ummantelungselement mit geschlossenem Querschnitt andererseits wird aufgrund der zwischen den Vorsprüngen des Krafteinleitungselements verlaufenden Fasern des Ummantelungselementes eine feste Verbindung geschaffen.

Das Prinzip der vorliegenden Erfindung beruht somit nicht nur auf einer Klebung, wie aus einigen Dokumenten des Standes der Technik bekannt, sondern auf einem zusätzlichen Formschluss zwischen Krafteinleitungselement und Ummantelungselement. Dies verbessert die Kraftübertragung und erleichtert die Zulassung und Überprüfung einer solchen Verbindung im Gegensatz zur reinen Klebung, bei der die Überprüfung der tatsächlichen Festigkeit mit zerstörungsfreien Prüfmethoden sehr aufwendig ist.

Durch eine dichte Anordnung der Vorsprünge kann im Vergleich zu Anordnungen des Standes der Technik eine bessere Verteilung der Krafteinleitung erreicht werden.

Die Anbindung des länglichen Elementes erfolgt dadurch, dass dieses vom Ummantelungselement umfasst oder einstückig damit ausgebildet wird.

Der Begriff "im wesentlichen aus einem Faserverbundmaterial bestehend" soll für die Zwecke der vorliegenden Erfindung klarstellen, dass das Ummantelungselement abgesehen vom Faserverbundmaterial zusätzliche Außenschichten aufweisen kann, die beispielsweise das Faserverbundmaterial vor Witterungseinflüssen etc. schützen.

Die erfindungsgemäße Anordnung kann einfach dadurch hergestellt werden, dass ein Krafteinleitungselement mit einer Oberfläche, welche Vorsprünge aufweist, mit dem Fasermaterial eines Faserverbundmaterials umwickelt oder umflochten wird, sodass die Fasern in durchlaufender Form zumindest teilweise in den zwischen den Vorsprüngen gebildeten Bereichen liegen. Anschließend kann das Faserverbundmaterial auf bekannte Weise imprägniert und ausgehärtet werden. Gegebenenfalls können auch bereits vorimprägnierte Fasern zur Umwickelung bzw. Umflechtung verwendet werden, so dass nur mehr eine Aushärtung stattfinden muss.

Die erfindungsgemäße Kombination einer mit Vorsprüngen besetzten Oberfläche mit einer Umwindung oder einem Geflecht aus faserverstärktem Kunststoff bietet dabei in der Produktion den Vorteil, dass die Fasern sich schon während der Herstellung in die Zwischenräume der Vorsprünge ablegen lassen, indem die Oberfläche mit Fasern überflochten und/oder umwunden wird, und so ein sehr haltbarer und belastbarer Verbund zwischen zwei aus verschiedenen Materialien bestehenden Elementen gebildet werden kann. Die vorliegende Erfindung ermöglicht zudem abhängig vom konkreten Anwendungsfall, bisher aus Metall bestehende Bauteile (z.B. metallische Buchsen) zumindest teilweise durch erheblich leichteres Faserverbundmaterial zu ersetzen.

Weitere vorteilhafte Ausführungsformen der Erfindung gehen aus den Unteransprüchen hervor.

Das längliche Element kann gemäß einem bevorzugten Ausführungsbeispiel aus demselben Material wie das Ummantelungselement bestehen (also ein Faserverbundmaterial enthalten) und mit dem Ummantelungselement einstückig ausgebildet sein. Dies erlaubt eine besonders kostengünstige Herstellung und deutliche Gewichtseinsparungen.

So kann das längliche Element beispielsweise ein aus einem Faserverbundmaterial bestehendes Rohr sein, welches an seinem Ende erfindungsgemäß mit einem im wesentlichen zylindrischen Krafteinleitungselement so verbunden ist, dass die Fasern des Faserverbundelementes zwischen den Vorsprüngen der Oberfläche des Krafteinleitungselementes verlaufen.

In einer weiteren vorteilhaften Ausführungsform kann das längliche Element vom Ummantelungselement separat ausgebildet und bei Verwendung zumindest abschnittsweise vom Ummantelungselement umgeben sein, wodurch es möglich ist, längliche Elemente verschiedenster Materialien mit der weiteren Komponente zu verbinden.

Das längliche Element kann beispielsweise als geflochtenes Zugelement, als pultrudierter Stab oder als Bündel aus mehreren pultrudierten Stäben ausgebildet sein.

Wenn eine derartige Ausführungsform gewählt wird, kann das längliche Element vorteilhafterweise zumindest in einem Teil des vom Ummantelungselement umgebenen Abschnittes ebenfalls Vorsprünge aufweisen, die das Ummantelungselement zumindest teilweise durchdringen, so dass die Kraftübertragung von beiden Verbindungskomponenten übernommen werden kann.

In dieser Ausführungsform kann das längliche Element beispielsweise als Bündel aus mehreren pultrudierten Stäben ausgebildet sein, wobei die Vorsprünge durch radial nach außen aufgebogene Enden der Einzelstäbe des pultrudierten Stabbündels gebildet sein können. Bei Umwicklung oder Umflechtung dieser nach außen aufgebogenen Enden durch die Fasern eines Faserverbundmaterials wird dabei eine feste Verbindung zwischen dem länglichen Element und dem Faserverbundmaterial erreicht. Dies stellt eine sehr kostengünstige Variante dar, da das vorteilhafte Pultrusionsverfahren zur Herstellung des länglichen Elements verwendet werden kann, durch welches Elemente mit genauer Formwiedergabe, im wesentlichen vollkommen ausgerichteten Fasern und einer glatten, ebenen Oberfläche herstellbar sind.

Insbesondere ist von Vorteil, wenn die Vorsprünge auf der Oberfläche des Krafteinleitungselementes stiftförmig ausgebildet sind, da dies zu einer zuverlässigen Führung der Fasern bei der Umflechtung und/oder Umwindung in dichte Anlage an die zu umflechtende und/oder umwindende Oberfläche führt.

Die Kopfform dieser Stifte kann je nach Anwendungsbereich gewählt werden; beispielsweise können die Stifte an ihrem nach außen ragenden Ende eine kugelförmige Erweiterung aufweisen.

Der Durchmesser der Stifte kann bevorzugt zwischen 0,3 mm und 3,5 mm, bevorzugt zwischen 0,5 mm und 2,5 mm, besonders bevorzugt zwischen 0,8 mm und 1,6 mm liegen.

Bevorzugt kann des Weiteren zumindest eine umlaufende Reihe von Vorsprüngen an dem Krafteinleitungselement bzw. an dem länglichen Element ausgebildet sein, um einen zuverlässigen Halt des Verbundfasermaterials zu ermöglichen. Diese Vorsprünge erweisen sich insbesondere beim Umflechten des Krafteinleitungselementes mit den Fasern des Faserverbundmaterials, und zwar beim Umkehren der Flechtrichtung und/oder Wickelrichtung als sehr vorteilhaft, da die Flechtfasern durch Verhaken an den Vorsprüngen in Position gehalten werden und das Geflecht nach dem Wechseln der Flechtrichtung nicht mehr vom Kern abgezogen werden kann.

Vorteilhafterweise können die Vorsprünge in Form eines regelmäßigen Musters auf der Außenfläche des Krafteinleitungselementes bzw. des länglichen Elementes verteilt sein, was eine einfache Herstellbarkeit ermöglicht. Die Anordnung der Vorsprünge kann dabei nach den Anforderungen an die Krafteinleitung maßgeschneidert werden. Über die Dichte der Vorsprünge kann eingestellt werden, wie viel Kraft in einem bestimmten Bereich des Überlappungsbereichs übertragen werden soll. Spannungsspitzen können abgemindert und so die Tragfähigkeit des gesamten Verbunds verbessert werden.

Die Vorsprünge können zufällig und/oder mit einem Dichtegradienten und/oder mit konstanter Dichte angeordnet sein, so dass den jeweiligen Anforderungen an das fertige Element in jeder Hinsicht Genüge getan werden kann.

Die Dimensionierung der Vorsprünge einerseits sowie die jeweiligen Abstände zwischen den Vorsprüngen andererseits können je nach Anwendungsbereich gewählt werden. Üblicherweise sollte das Verhältnis zwischen dem Abstand zwischen zwei Vorsprüngen und dem Durchmesser der Vorsprünge größer als 1, bevorzugt zumindest 3 sein. Dieses Verhältnis kann auch Werte von 10 und mehr annehmen.

Die Dichte der Vorsprünge am Krafteinleitungselement bzw. gegebenenfalls am länglichen Element kann mindestens 1 Vorsprung/cm², bevorzugt zwischen 5 und 20 Vorsprüngen/cm², besonders bevorzugt zwischen 8 und 15 Vorsprüngen/cm² betragen.

Die an dem Krafteinleitungselement bzw. gegebenenfalls am länglichen Element vorgesehenen Vorsprünge können einstückig mit dem Krafteinleitungselement bzw. dem länglichen Element ausgebildet oder durch Schweißen, Löten, Kleben, Einschrauben oder ähnliche Maßnahmen mit dem Krafteinleitungselement bzw. dem länglichen Element verbunden sein, so dass eine einfache und kostengünstige Herstellung möglich ist.

Dabei stellt das Aufschweißen von stiftförmigen Vorsprüngen nach dem sogenannten Kalt-Metall-Transfer-Verfahren eine besonders bevorzugte Ausführungsform dar. Das Kalt-Metall-Transfer-Verfahren ist beispielsweise aus der WO 2006/125234 A1 bekannt. Dieses Verfahren erlaubt ein schnelles und reproduzierbares Aufschweißen von stiftförmigen Vorsprüngen mit dem gewünschten Durchmesser sowie einstellbarer Länge und Kopfform der Stiftes.

Gemäß einer weiteren Ausführungsform der Erfindung ist ein Spreizkörper vorgesehen, der in an sich bekannter Weise das längliche Element an dessen dem Krafteinleitungselement zugewandten Ende aufspreizt und durch welchen bei Verwendung das längliche Element zwischen Spreizkörper und Ummantelungselement und/oder Krafteinleitungselement eingeklemmt wird. Hauptvorteil dieser Variante ist die einfache und flexible Montierbarkeit der Verbindung.

Von Vorteil ist weiterhin, wenn das Krafteinleitungselement aus einem Material ausgewählt aus der Gruppe bestehend aus Metall, Kunststoff, faserverstärktem Kunststoff und Keramik besteht, da dies eine hohe Haltbarkeit gewährleistet.

Das Faserverbundmaterial des Ummantelungselementes ist vorteilhafterweise aus einem Material ausgewählt aus der Gruppe bestehend aus faserverstärktem Kunststoff, faserverstärktem Metall und faserverstärkter Keramik, welche Materialien sich durch eine hohe Elastizität und Festigkeit sowie ein geringes Gewicht auszeichnen.

Weiterhin ist von Vorteil, wenn die im Faserverbundmaterial eingesetzten Fasern aus der Gruppe bestehend aus Kohlefaser, Glasfaser, Aramidfaser, Borfaser, Keramikfaser, Basaltfaser, PBO-Faser oder einer beliebigen Kombination dieser Fasern ausgewählt sind, da es somit möglich ist, die Fasern je nach den an das Material gestellten Anforderungen optimal auszuwählen.

Vorteilhafterweise kann sich das Krafteinleitungselement zu seiner der weiteren Komponente abgewandten Seite hin verjüngen, so dass eine verbesserte Kraftübertragung der aneinanderhaftenden Oberflächen des Krafteinleitungselementes einerseits und des länglichen Elementes andererseits durch Abminderung von Spannungsspitzen erreicht werden kann. Das Material des Krafteinleitungselements kann sich im dünnen Bereich weiter verformen und der Last anpassen und nimmt in diesem Bereich weniger Kraft auf. Je dicker das Material wird, desto steifer ist es, wodurch sich der Übergang der Kraft in diesem Bereich verstärkt. Die Spannungsverteilung gleicht sich über den gesamten Bereich der Überlappung aus.

Ebenso kann sich vorteilhafterweise das Ummantelungselement zu seiner der weiteren Komponente abgewandten Seite hin verjüngen, was ebenfalls eine Abminderung von Spannungsspitzen und damit eine gleichmäßigere Kraftübertragung bewirkt.

In einer weiteren Ausführungsform kann an dem der weiteren Komponente zugewandten Ende des Krafteinleitungselements ein Verbindungselement vorgesehen sein, so dass eine schnelle und einfache Verbindung mit der weiteren Komponente möglich ist.

Vorteilhafterweise kann das Verbindungselement ein Auge, ein Flansch, ein Zahnrad oder ein Gewinde sein oder ein anderes übliches Anbindungselement aus dem Maschinenbau, was vielfältige Kombinationsmöglichkeiten mit Schrauben, Haken, Flanschen und anderen Elementen ermöglicht.

In einer weiteren bevorzugten Ausführungsform der erfindungsgemäßen Anordnung ist das Faserverbundmaterial des Ummantelungselementes aus mehr als einer Schicht Fasermaterial, insbesondere aus zwei Schichten aufgebaut. Das bedeutet, dass auf einer Schicht von aufgebrachtem Fasermaterial zumindest eine weitere Schicht Fasermaterial aufgebracht wird, die zwischen den Vorsprüngen abgelegt wird.

Bevorzugte Ausführungsformen der Erfindung werden im Folgenden unter Bezugnahme auf die Zeichnungen näher erläutert. Es zeigen:
- Fig. 1A-1C: stark schematisierte Schnittdarstellungen dreier bevorzugter Ausführungsbeispiele erfindungsgemäß ausgestalteter Anordnungen zum Verbinden eines Elements mit einer weiteren Komponente,
- Fig. 2: eine perspektivische Darstellung eines Krafteinleitungselements zur Verwendung in den erfindungsgemäßen Anordnungen gemäß Fig. 1A bis 1C,
- Fig. 3: eine perspektivische Darstellung eines teilweise umflochtenen Krafteinleitungselements gemäß Fig. 2,
- Fig. 4A-4B: stark schematisierte Darstellungen eines weiteren bevorzugten Ausführungsbeispiels einer erfindungsgemäßen Anordnung mit einem Bündel aus pultrudierten Stäben, und
- Fig. 5: eine schematische Darstellung des Verlaufes der Fasern des Ummantelungselementes bei einer Umflechtung des Krafteinleitungselements.

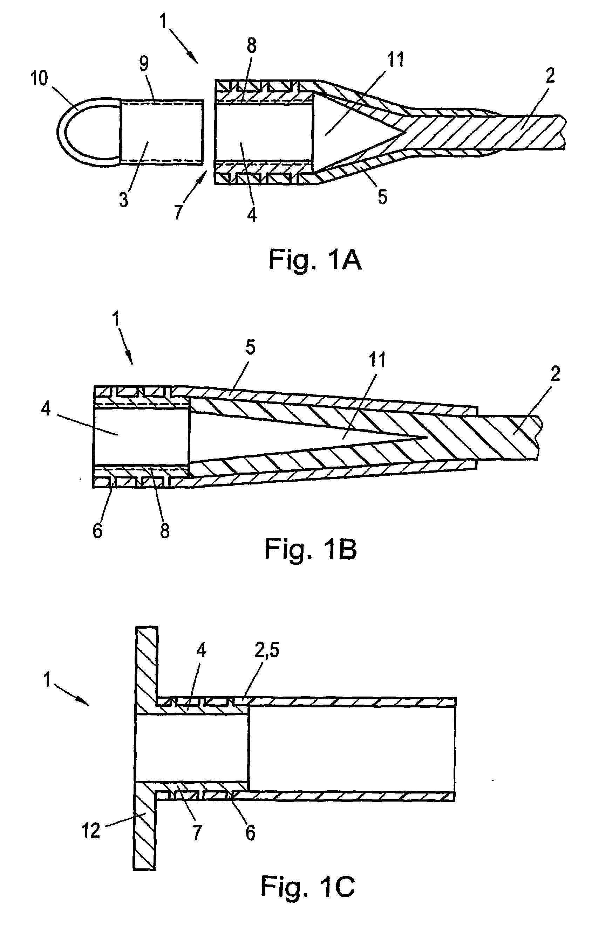

Die Fig. 1A bis 1C zeigen stark schematisierte Schnittdarstellungen von erfindungsgemäßen Anordnungen 1, welche zum Verbinden eines insbesondere zur Aufnahme und Übertragung von Zug- und/oder Torsionskräften eingesetzten länglichen Elements 2 mit einer weiteren Komponente 3 unter Kraft- und Formschluss geeignet sind.

Die Anordnungen 1 gemäß den Fig. 1A bis 1C umfassen jeweils ein Krafteinleitungselement 4, welches in den Ausführungsbeispielen im Wesentlichen hohlzylindrisch ausgebildet ist. Das Krafteinleitungselement 4 ist mit dem länglichen Element 2 durch ein Ummantelungselement 5 mit geschlossenem Querschnitt verbindbar. Das Ummantelungselement 5 besteht dabei im wesentlichen aus einem Faserverbundmaterial, dessen Verstärkungsfaseranordnung im Flecht- und/oder Wickelverfahren hergestellt wird.

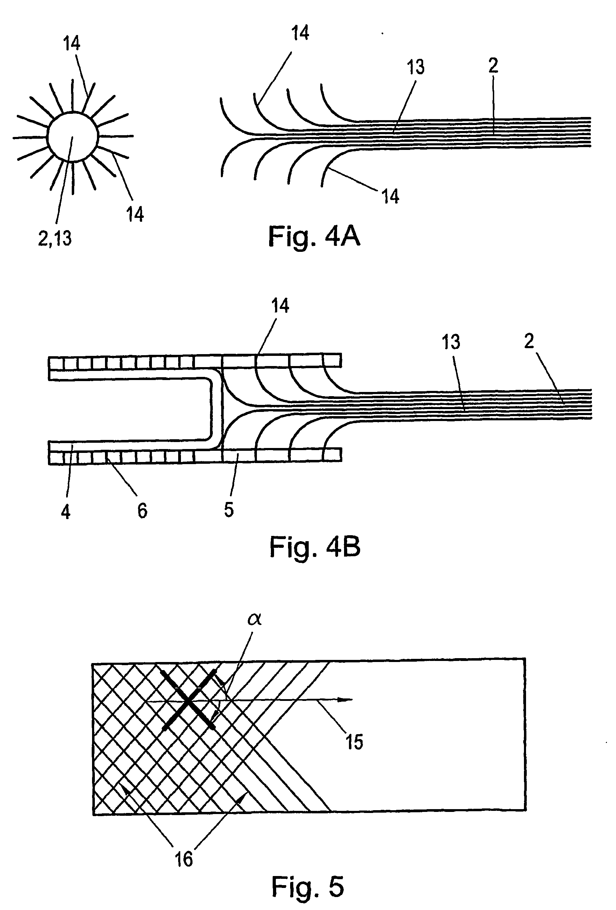

Die Kraftübertragung zwischen dem Krafteinleitungselement 4 und dem Ummantelungselement 5 erfolgt dabei durch Vorsprünge 6, welche an einer dem Ummantelungselement 5 zugewandten Außenfläche des Krafteinleitungselements 4 angeordnet sind, in die sich das Geflecht und/oder die Wickelstruktur des Ummantelungselements 5 verzahnen kann. Die Vorsprünge 6 durchdringen das Ummantelungselement 5 zumindest teilweise und sorgen so für eine Verbindung zwischen dem länglichen Element 2 und dem Krafteinleitungselement 4, wobei die im Faserverbundmaterial des Ummantelungselements 5 enthaltenen Fasern in durchlaufender Form zumindest teilweise in den zwischen den Vorsprüngen 6 gebildeten, in Bezug auf die Vorsprünge 6 vertieften, Bereichen liegen. Die Faserrichtung der Fasern 16 des Ummantelungselements 5 zeigt sich dabei in der Seitenansicht so, dass die Fasern einen Winkel α mit der Bauteillängsrichtung 15 des länglichen Elements 2 einschließen, wobei der Winkel 0 < α ≤ 90° ist. Dies ist schematisch in Figur 5 dargestellt.

Dadurch ist eine zuverlässige Übertragung von Zug- und Torsionskräften aus dem länglichen Element 2 in die Faserverbundstruktur des Ummantelungselements 5 und aus dieser in das metallische Krafteinleitungselement 4 möglich.

Das Faserverbundmaterial ist hierbei in Form eines Fasergeflechts oder einer Wickelstruktur aufgebaut und mit einem erhärtbaren Matrixmaterial stabilisiert. Dieses kann sowohl thermoplastischer als auch duroplastischer Natur sein. Bei der Bauteilinfiltration kann es sich zum Beispiel um ein RTM (resin transfer moulding bzw. Spritzpressen)- oder ein anderweitiges Infusionsverfahren handeln. Für besondere Anwendungen sind auch metallische oder keramische Matrixmaterialien denkbar.

Als verwendete Fasern kommen vor allem Kohlefaser, Glasfaser, Aramidfaser, Borfaser, Keramikfaser, Basaltfaser, PBO-Faser oder eine beliebige Kombination dieser Fasern in Betracht. Je nach Anforderung kann der Fachmann die jeweils geeignete Faser wählen.

Das Krafteinleitungselement 4 ist in den in Fig. 1A und 1B dargestellten Ausführungsbeispielen mit einem Verbindungselement 7 in Form eines Innengewindes 8 versehen, welches das Verbinden mit einem mit einem Außengewinde 9 versehenen weiteren Element 3 ermöglicht. In Fig. 1A ist zur Verdeutlichung beispielhaft eine Öse 10 an das weitere Element 3 angeformt. Die Verbindung kann auch über andere geeignete Verbindungselemente 7 wie beispielsweise eine Bajonettverbindung erzielt werden. Auch einstückig mit dem Krafteinleitungselement 4 ausgebildete Vorrichtungen wie Augen, Flansche, Zahnräder etc. sind möglich.

Die Vorsprünge 6 können aufgeschweißt, aber auch anderweitig mit dem Krafteinleitungselement 4 verbunden sein, beispielsweise durch Löten, Kleben, Einschrauben oder ähnliche Maßnahmen. Bevorzugt sind die Vorsprünge nach dem Kalt-Metall-Transfer-Verfahren aufgeschweißt.

Des Weiteren besteht die Möglichkeit, dass die Vorsprünge 6 integral mit dem Krafteinleitungselement 4 verbunden sind, wenn es sich dabei zum Beispiel um ein Gussteil oder ein gefrästes Bauelement handelt.

Das Ummantelungselement 5 aus Faserverbundmaterial bildet in den Ausführungsformen gemäß Fig. 1A und 1B einen kegelstumpfförmigen Hohlkörper, in den das längliche Element 2 eingeführt ist. Bei dem Element 2 kann es sich zum Beispiel um eine Stange aus einem faserverstärkten Verbundmaterial mit Thermoplast- oder Duroplastmatrix oder auch um ein aus Fasern gebildetes Seil oder Kabel handeln. Die Fasern können hierbei ausschließlich in Längsrichtung oder auch in Form eines Geflechts oder eines gedrehten Kabels vorliegen. Des Weiteren kann das längliche Element 2 aus mehreren Einzelelementen gebildet sein.

Das längliche Element 2 wird im Inneren des kegelstumpfförmigen Ummantelungselements 5 aufgeweitet, um mit dem Ummantelungselement 5 einen Formschluss herzustellen. Dies kann, wie zum Beispiel aus den Fig. 1A und 1B erkennbar, durch einen in das längliche Element 2 eingeführten Spreizkörper 11 geschehen. Dieser bewirkt eine Verteilung der Fasern in Umfangsrichtung und führt zu einer ausgeglichenen Faserbelastung.

Ein großer Vorteil der Verwendung eines Ummantelungselementes 5, dessen Fasern als Geflecht vorliegen, liegt bei dieser Art der Ausführung einer Endanbindung eines länglichen Elements 2 darin, dass sich das Geflecht unter Zugbelastung zusammenzieht und so eine erhöhte Haltekraft auf das längliche Element 2 im Bereich der Aufspreizung aufbringt. Des Weiteren bieten die in Umfangsrichtung durchgängig verlaufenden Fasern eine hervorragende Verstärkung gegen eine Aufsprengwirkung des eingeführten Spreizkörpers 11, da sie optimal auf Zug belastet werden.

Die Infiltration der als Umflechtung oder Umwickelung vorliegenden Fasern des Ummantelungselements 5 mit dem Matrixmaterial kann hierbei in einem RTM (resin transfer moulding oder Spritzpressen)- oder einem anderweitigen Infusionsverfahren, wie z.B. dem Vakuuminfusionsverfahren, stattfinden. Es ist dabei sowohl denkbar, dass das Fasergeflecht des Ummantelungselements 5 zusammen mit dem metallischen Krafteinleitungselement 4 getrennt von Spreizkörper 11 und länglichem Element 2 ausgehärtet wird, aber auch, dass die Infiltration stattfindet, wenn die komplette Endverbindung bereits auf das Ende des länglichen Elements 2 aufgebracht ist, um mit einem Prozessschritt die Geflechtinfiltration und eine Verklebung mit dem eingeführten Element 2 zu erreichen.

Es ist außerdem auch möglich, dass zur Herstellung des Geflechts mit thermoplastischem oder duroplastischem Matrixmaterial vorimprägnierte Fasern verwendet werden. Ein zusätzlicher Infusionsschritt kann so vermieden werden. Das Bauteil muss im Falle der Verwendung einer duroplastischen Matrix im Ofen ausgehärtet bzw. im Fall der Verwendung einer thermoplastischen Matrix auf die Erweichungstemperatur erwärmt und danach in einer geeigneten Form wieder soweit abgekühlt werden, dass die Matrix erhärtet.

Als weitere Ausführungsform ist in Fig. 1 C noch die Möglichkeit dargestellt, dass das längliche Element 2 aus demselben Material wie das Ummantelungselement 5 besteht und mit dem Ummantelungselement 5 einstückig ausgebildet ist, beispielsweise als Stange aus faserverstärktem Kunststoff mit einem endständigen Krafteinleitungselement 4. Damit wird das Krafteinleitungselement 4 während des Herstellungsvorgang des länglichen Elements 2 in dieses integriert, was eine besonders einfache und daher kostengünstige Variante darstellt.

In Fig. 1C ist ein solches Ausführungsbeispiel einer erfindungsgemäß ausgestalteten Anordnung 1 dargestellt. Hierbei ist das längliche Element 2 als Hohlwelle oder Rohr aus Faserverbundmaterial ausgebildet und somit in diesem Ausführungsbeispiel identisch mit dem Ummantelungselement 5. Das abgebildete Element 2 kann hierbei das eine Ende einer Welle sein, die zur Übertragung vor Torsionskräften bestimmt ist. Die integrale Fertigung des Rohres mit dem Flanschansatz 12, zum Beispiel in einem RTM- oder Infusionsverfahren, führt hierbei zu einer hervorragenden Anbindung des rohrförmigen länglichen Elements 2 an den Flanschansatz 12. Ein derartiges Rohr aus Geflecht eignet sich im besonderen zur Übertragung von Torsionslasten, da die Fasern in einem für die Kraftübertragung optimalen Winkel ausgerichtet sein können. Die Verbindung der Torsionswelle erfolgt über das Krafteinleitungselement 4 mit einem Flanschansatz 12, welcher ebenfalls, wie das Krafteinleitungselement 4, aus Metall gebildet und mit dem Krafteinleitungselement 4 einstückig ausgebildet oder mit diesem in geeigneter Weise wie beispielsweise durch Schweißen, Löten etc. verbunden ist.

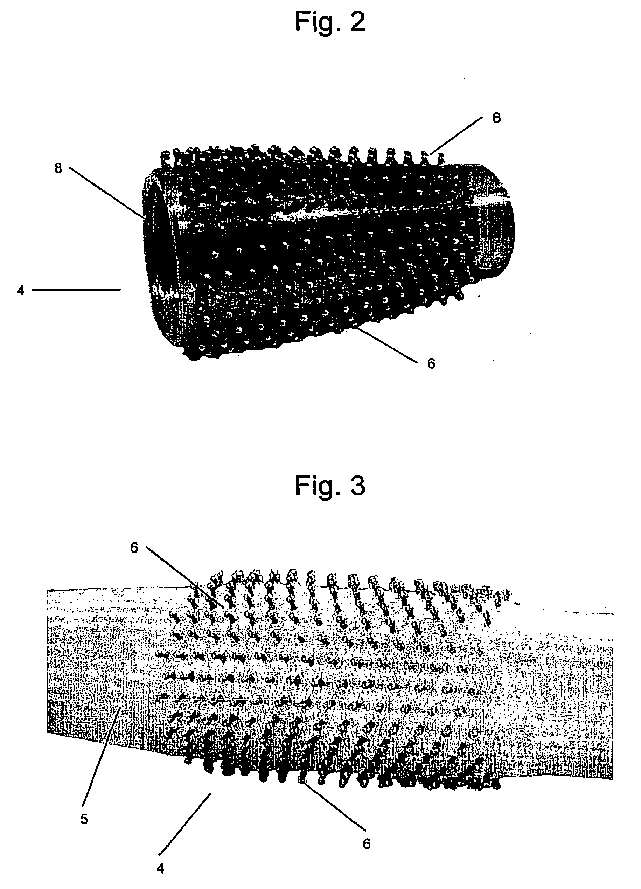

In Fig. 2 ist ein Krafteinleitungselement 4, welches zur Verwendung mit einer der Anordnungen gemäß Fig. 1A bis 1C geeignet ist, vergrößert dargestellt. Das Krafteinleitungselement 4 ist dabei im Ausführungsbeispiel leicht konisch zulaufend ausgebildet. Es kann jedoch auch, wie in den Fig. 1A bis 1C angedeutet, zumindest abschnittsweise zylindrisch ausgebildet sein.

Das Krafteinleitungselement 4 besteht vorzugsweise aus Metall, kann jedoch je nach Anwendungsfall auch aus einem hochfesten Kunststoff, einem faserverstärktem Kunststoff oder Keramik bestehen.

Die Vorsprünge 6 können auf vielfältige Art gestaltet sein. Erfindungsgemäß ist dabei eine stiftartige Form, welche in Fig. 2 und Fig. 3 gut sichtbar ist. In Fig. 2 ist dabei das Krafteinleitungselement 4 allein, in Fig. 3 das mit dem Ummantelungselement 5 bereits zum Teil überflochtene Krafteinleitungselement 4 dargestellt. Wie bereits weiter oben erwähnt, durchdringen die Vorsprünge 6 das Faserverbundmaterial des Ummantelungselements 5 zumindest teilweise. Im Ausführungsbeispiel stehen sie darüber hinaus, ihre Länge ist also größer als die Dicke des zu diesem Zeitpunkt aufgebrachten Fasermaterials. Dadurch ist es beispielsweise möglich, eine weitere Schicht Fasermaterial aufzubringen, die zwischen den Vorsprüngen abgelegt wird. Auf diese Weise können auch die oberen Faserlagen, die nicht direkt mit der Oberfläche des Krafteinleitungselements über die bei der Bauteilaushärtung entstehende Klebung verbunden sind, Kraft an die Vorsprünge 6 und damit an das Krafteinleitungselement 4 übertragen, was zu einer besseren Ausnutzung des vorhandenen Materials zum Zweck der Kraftübertragung führt.

Die stiftartige Form sorgt dafür, dass sich die Fasern des Verbundfasermaterials des Ummantelungselements 5 zuverlässig in die Zwischenräume zwischen den Vorsprüngen 6 an die Oberfläche des Krafteinleitungselements 4 legen und weder an den Seiten der Vorsprünge 6 erhöht hängen bleiben oder unter Zug über die Vorsprünge 6 rutschen können.

Um eine zuverlässige Verbindung zu erzielen, sollte zumindest eine umlaufende Reihe von Vorsprüngen 6 an dem Krafteinleitungselement 4 vorgesehen sein. Die Vorsprünge 6 können weiterhin in Form eines regelmäßigen Musters auf der Außenfläche des Krafteinleitungselementes 4 aufgebracht sein, beispielsweise in zueinander versetzt umlaufenden Reihen, bei welchen jeweils die Vorsprünge 6 einer Reihe in den Zwischenräumen der Vorsprünge 6 der vorhergehenden Reihe ausgebildet sind. Eine derartige Anordnung geht aus Fig. 2 hervor. Die Vorsprünge 6 können jedoch auch zufällig auf der Oberfläche des Krafteinleitungselements 4 angeordnet sein. Sie können einen Dichtegradienten aufweisen oder, wie in Fig. 2 und 3 gezeigt, mit konstanter Dichte angeordnet sein. Weiterhin ist es möglich, die genannten Merkmale zu kombinieren, indem beispielsweise ein Bereich des Krafteinteitungselements 4 mit einer dichten regelmäßigen Anordnung von Vorsprüngen 6 versehen ist, während in zumindest einem weiteren Bereich nur mehr vereinzelte Vorsprünge 6 vorgesehen sind.

Die Dichte der Vorsprünge beträgt bevorzugt mindestens 1 Vorsprung/cm². In der in Fig. 2 und 3 gezeigten Ausführungsform beträgt die Dichte der Vorsprünge ca. 10 Vorsprünge/cm².

Die Vorsprünge 6 bestehen im Falle der integralen Ausbildung mit dem Krafteinleitungselement 4 aus dem gleichen Material wie dieses, können jedoch je nach den Anforderungen auch aus anderen Materialien bestehen. So können beispielsweise Vorsprünge 6 aus einem Schweißdraht aus einer Stahlsorte auf einem Krafteinleitungselement 4 aus einer anderen Stahlsorte angeordnet sein.

In Fig. 4A und 4B ist ein weiteres Ausführungsbeispiel einer erfindungsgemäß ausgestalteten Anordnung 1 dargestellt, wobei das längliche Element 2 aus einer Vielzahl von Einzelelementen besteht, insbesondere aus einer Mehrzahl von pultrudierten Stäben 13.

Die Stäbe 13 können dabei an ihren Enden 14 radial nach außen aufgebogen sein, so dass sich im Querschnitt eine strahlenförmige Form ergibt, wie in Fig. 4A links stark schematisiert dargestellt.

Soll ein Krafteinleitungselement 4 in bekannter, beispielsweise in Fig. 2 dargestellter Form, mit dem Bündel pultrudierter Stäbe 13 verbunden werden, kann dies ebenfalls mittels eines Ummantelungselements 5 erfolgen, indem dieses sowohl die Enden 14 der pultrudierten Stäbe 13 als auch die Vorsprünge 6 des Krafteinleitungselements ummantelt. Die Enden 14 der Stäbe 13 durchdringen ebenso wie die Vorsprünge 6 das Fasermaterial des Ummantetungsetements 5 zumindest teilweise, so dass auch hier eine sichere und feste Verbindung möglich ist.

## Patentansprüche

1. Anordnung (1) zur Verbindung eines insbesondere zur Aufnahme und/oder Übertragung von Zug- und/oder Torsionskräften eingesetzten länglichen Elements (2) mit einer weiteren Komponente (3), umfassend ein Krafteinleitungselement (4) mit einer der weiteren Komponente (3) zugewandten und einer der weiteren Komponente (3) abgewandten Seite und ein Ummantelungselement (5) mit geschlossenem Querschnitt, welche das Krafteinleitungselement (4) zumindest abschnittsweise ummantelt und das Krafteinleitungselement (4) auf dessen von der weiteren Komponente (3) abgewandten Seite überragt, wobei auf zumindest einem Abschnitt des Krafteinleitungselementes (4) an seiner dem Ummantelungselement (5) zugewandten Außenfläche Vorsprünge (6) vorgesehen sind, die das Ummantelungselement (5) zumindest teilweise durchdringen, und das Ummantelungselement (5) im wesentlichen aus einem Faserverbundmaterial besteht, dessen Faserstruktur im Flecht- und/oder Wickelverfahren hergestellt wird, wobei die im Faserverbundmaterial enthaltenen Fasern in durchlaufender Form zumindest teilweise in den zwischen den Vorsprüngen (6) gebildeten Bereichen liegen, **dadurch gekennzeichnet, dass** die Vorsprünge (6) zumindest in einem Bereich des Krafteinleitungselementes (4) in einer dichten regelmäßigen Anordnung vorliegen, dass die Vorsprünge (6) stiftförmig ausgebildet sind und dass das Verhältnis zwischen Höhe der Vorsprünge (6) und Durchmesser der Vorsprünge (6) 3 und mehr ist.

2. Anordnung nach Anspruch 1, **dadurch gekennzeichnet, dass** das längliche Element (2) aus demselben Material wie das Ummantelungselement (5) besteht und mit dem Ummantelungselement (5) einstückig ausgebildet ist.

3. Anordnung nach Anspruch 1, **dadurch gekennzeichnet, dass** das längliche Element (2) vom Ummantelungselement (5) separat ausgebildet und bei Verwendung zumindest abschnittsweise vom Ummantelungselement (5) umgeben ist.

4. Anordnung nach Anspruch 3, **dadurch gekennzeichnet, dass** das längliche Element (2) zumindest in einem Teil des vom Ummantelungselement (3) umgebenen Abschnittes ebenfalls Vorsprünge (6) aufweist, die das Ummantelungselement (5) zumindest teilweise durchdringen.

5. Anordnung nach Anspruch 3 oder 4, **dadurch gekennzeichnet, dass** das längliche Element (2) als Bündel aus mehreren pultrudierten Stäben (13) ausgebildet ist und die Vorsprünge (6) durch radial nach außen aufgebogene Enden (14) der einzelnen Stäbe (13) des pultrudierten Stabbündels gebildet sind.

6. Anordnung nach Anspruch 5, **dadurch gekennzeichnet, dass** der Durchmesser der stiftförmig ausgebildeten Vorsprünge zwischen 0,3 mm und 3,5 mm, bevorzugt zwischen 0,5 mm und 2,5 mm, besonders bevorzugt zwischen 0,8 mm und 1,6 mm liegt.

7. Anordnung nach einem der Ansprüche 1 bis 6, **dadurch gekennzeichnet, dass** zumindest eine umlaufende Reihe von Vorsprüngen (6) an dem Krafteinleitungselement (4) bzw. an dem länglichen Element (2) ausgebildet ist.

8. Anordnung nach einem der Ansprüche 1 bis 7, **dadurch gekennzeichnet, dass** die Vorsprünge (6) in Form eines regelmäßigen Musters und/oder mit einem Dichtegradienten und/oder mit konstanter Dichte auf der Außenfläche des Krafteinleitungselementes (4) bzw. des länglichen Elementes (2) verteilt sind.

9. Anordnung nach einem der Ansprüche 1 bis 8, **dadurch gekennzeichnet, dass** das Verhältnis zwischen dem Abstand zwischen zwei Vorsprüngen (6) und dem Durchmesser der Vorsprünge (6) größer als 1, bevorzugt zumindest 3 ist.

10. Anordnung nach einem der Ansprüche 1 bis 9, **dadurch gekennzeichnet, dass** die Dichte der Vorsprünge mindestens 1 Vorsprung/cm², bevorzugt zwischen 5 und 20 Vorsprüngen/cm², besonders bevorzugt zwischen 8 und 15 Vorsprüngen/cm² beträgt.

11. Anordnung nach einem der Ansprüche 1 bis 10, **dadurch gekennzeichnet, dass** die an dem Krafteinleitungselement (4) bzw. am länglichen Element (2) ausgebildeten Vorsprünge (6) durch Schweißen mit dem Krafteinleitungselement (4) bzw. dem länglichen Element (2) verbunden sind, und zwar indem sie nach dem Kalt-Metall-Transfer-Verfahren aufgeschweißt sind.

12. Anordnung nach einem der Ansprüche 1 bis 11, **dadurch gekennzeichnet, dass** das Krafteinleitungselement (4) aus einem Material ausgewählt aus der Gruppe bestehend aus Metall, Kunststoff, faserverstärktem Kunststoff und Keramik besteht.

13. Anordnung nach einem der Ansprüche 1 bis 12, **dadurch gekennzeichnet, dass** sich das Krafteinleitungselement (4) und/oder das Ummantelungselement (5) zu seiner der weiteren Komponente (3) abgewandten Seite hin verjüngt.

14. Anordnung nach einem der Ansprüche 1 bis 13, **dadurch gekennzeichnet, dass** am der weiteren (3) Komponente zugewandten Ende des Krafteinleitungselements (4) ein Verbindungselement (7), bevorzugt in Form eines Auges, eines Flansches, eines Zahnrades oder eines Gewindes (8), vorgesehen ist.

## Claims

1. An arrangement (1) for connecting an elongate element (2) used in particular for absorbing and/or transmitting tensile and/or torsional forces to a further component (3), comprising a force introduction element (4) with a side facing the further component (3) and a side facing away from the further component (3) and an encasing element (5) having a closed cross-section, said encasing element encasing the force introduction element (4) at least in some sections and projecting over the force introduction element (4) on its side which faces away from the further component (3), wherein projections (6) are provided on at least one section of the force introduction element (4) on its outer surface facing the encasing element (5), said projections penetrating the encasing element (5) at least partially, and the encasing element (5) consists essentially of a fibre composite material the fibre structure of which is produced in a braiding and/or winding process, wherein the fibres contained in the fibre composite material lie in continuous form at least partially in the regions formed between the projections (6), **characterized in that** the projections (6) are present in a dense, regular arrangement at least in one region of the force introduction element (4), that the projections (6) are shaped in the form of pins and that the ratio of the height of the projections (6) to the diameter of the projections (6) is 3 and more.

2. An arrangement according to claim 1, **characterized in that** the elongate element (2) consists of the same material as the encasing element (5) and is formed in one piece with the encasing element (5).

3. An arrangement according to claim 1, **characterized in that** the elongate element (2) is designed separately from the encasing element (5) and, in use, is surrounded by the encasing element (5) at least in some sections.

4. An arrangement according to claim 3, **characterized in that** the elongate element (2) likewise exhibits projections (6) at least in a part of the section surrounded by the encasing element (3), which projections penetrate the encasing element (5) at least partially.

5. An arrangement according to claim 3 or 4, **characterized in that** the elongate element (2) is designed as a bundle of several pultruded rods (13) and the projections (6) are formed by ends (14) of the individual rods (13) of the pultruded bundle of rods which are radially bent outwards.

6. An arrangement according to claim 5, **characterized in that** the diameter of the projections shaped in the form of pins ranges between 0.3 mm and 3.5 mm, preferably between 0.5 mm and 2.5 mm, particularly preferably between 0.8 mm and 1.6 mm.

7. An arrangement according to any of claims 1 to 6, **characterized in that** at least one circumferential row of projections (6) is formed on the force introduction element (4) or on the elongate element (2), respectively.

8. An arrangement according to any of claims 1 to 7, **characterized in that** the projections (6) are distributed on the outer surface of the force introduction element (4) or the elongate element (2), respectively, in the form of a regular pattern and/or with a density gradient and/or with a constant density.

9. An arrangement according to any of claims 1 to 8, **characterized in that** the ratio of the distance between two projections (6) to the diameter of the projections (6) is greater than 1, preferably at least 3.

10. An arrangement according to any of claims 1 to 9, **characterized in that** the density of the projections is at least 1 projection/cm², preferably between 5 and 20 projections/cm², particularly preferably between 8 and 15 projections/cm².

11. An arrangement according to any of claims 1 to 10, **characterized in that** the projections (6) formed on the force introduction element (4) and on the elongate element (2), respectively, are connected to the force introduction element (4) or the elongate element (2), respectively, by welding, namely by welding according to the cold metal transfer process.

12. An arrangement according to any of claims 1 to 11, **characterized in that** the force introduction element (4) consists of a material selected from the group consisting of metal, plastic, fibre-reinforced plastic and ceramics.

13. An arrangement according to any of claims 1 to 12, **characterized in that** the force introduction element (4) and/or the encasing element (5) taper(s) toward its side facing away from the further component (3).

14. An arrangement according to any of claims 1 to 13, **characterized in that** a connecting element (7) is provided on the end of the force introduction element (4) facing the further component (3), wherein said connecting element is preferably in the form of an eye, a flange, a toothed wheel or a thread (8).

## Revendications

1. Agencement (1) pour relier un élément allongé (2) utilisé en particulier pour encaisser et/ou transmettre des forces de traction et/ou de torsion, avec un autre composant (3), comprenant un élément d'application de force (4) avec un côté tourné vers l'autre composant (3) et un côté détourné de l'autre composant (3), et un élément enveloppe (5) à section fermée, qui enveloppe au moins par tronçons l'élément d'application de force (4) et qui dépasse de l'élément d'application de force (4) sur son côté détourné de l'autre composant (3), dans lequel, sur au moins un tronçon de l'élément d'application de force (4) et sur sa surface extérieure tournée vers l'élément enveloppe (5), il est prévu des saillies (6) qui traversent au moins partiellement l'élément enveloppe (5), et l'élément enveloppe (5) est essentiellement en un matériau composite à base de fibres, dont la structure fibreuse est produite dans un processus de tressage et/ou d'embobinage, et les fibres contenues dans le matériau composite à base de fibres reposent sous forme continue au moins partiellement dans les zones formées entre les saillies (6), **caractérisé en ce que** les saillies (6) se présentent, au moins dans une zone de l'élément d'application de force (4), sous un agencement régulier serré, **en ce que** les saillies (6) sont réalisées sous forme de tige, et **en ce que** le rapport de la hauteur des saillies (6) sur le diamètre des saillies (6) est égal à 3 et plus.

2. Agencement selon la revendication 1, **caractérisé en ce que** l'élément allongé (2) est du même matériau que l'élément enveloppe (5), et est réalisé d'une seule pièce avec l'élément enveloppe (5).

3. Agencement selon la revendication 1, **caractérisé en ce que** l'élément allongé (2) est réalisé séparément de l'élément enveloppe (5) et lors de l'utilisation, il est entouré au moins par tronçons par l'élément enveloppe (5).

4. Agencement selon la revendication 3, **caractérisé en ce que** l'élément allongé (2) présente, au moins dans une partie du tronçon qui entoure l'élément enveloppe (3), également des saillies (6) qui traversent au moins partiellement l'élément enveloppe (5).

5. Agencement selon la revendication 3 ou 4, **caractérisé en ce que** l'élément allongé (2) est réalisé comme un faisceau de plusieurs barreaux pultrudés (13), et les saillies (6) sont formées par des extrémités (14), recourbées radialement vers l'extérieur, des barreaux individuels (13) du faisceau de barreaux pultrudés.

6. Agencement selon la revendication 5, **caractérisé en ce que** le diamètre des saillies réalisées sous forme de tige est entre 0,3 mm et 3,5 mm, de préférence entre 0,5 mm et 2,5 mm, de manière particulièrement préférée entre 0,8 mm et 1,6 mm.

7. Agencement selon l'une des revendications 1 à 6, **caractérisé en ce qu'**au moins une rangée périphérique de saillies (6) est réalisée sur l'élément d'application de force (4) ou respectivement sur l'élément allongé (2).

8. Agencement selon l'une des revendications 1 à 7, **caractérisé en ce que** les saillies (6) sont réparties et sur la surface extérieure de l'élément d'application de force (4) ou respectivement sur l'élément allongé (2) sous la forme d'un motif régulier et/ou avec un gradient de densité et/ou avec une densité constante.

9. Agencement selon l'une des revendications 1 à 8, **caractérisé en ce que** le rapport de la distance entre deux saillies (6) sur le diamètre des saillies (6) est supérieur à 1, de préférence au moins égal à 3.

10. Agencement selon l'une des revendications 1 à 9, **caractérisé en ce que** la densité des saillies est d'au moins 1 saillie/cm², de préférence entre 5 et 20 saillies/cm², et de manière particulièrement préférée entre 8 et 15 saillies/cm².

11. Agencement selon l'une des revendications 1 à 10, **caractérisé en ce que** les saillies (6) réalisées sur l'élément d'application de force (4) ou respectivement sur l'élément allongé (2) sont reliées à l'élément d'application de force (4) ou respectivement à l'élément allongé (2) par soudure, et cela **en ce qu'**elles sont rapportées par soudage suivant le procédé de transfert de métal à froid.

12. Agencement selon l'une des revendications 1 à 11, **caractérisé en ce que** l'élément d'application de force (4) est en un matériau choisi dans le groupe comprenant métal, matière plastique, matière plastique renforcée par des fibres, et céramique.

13. Agencement selon l'une des revendications 1 à 12, **caractérisé en ce que** l'élément d'application de force (4) et/ou l'élément enveloppe (5) va en se rétrécissant sur son côté détourné de l'autre composant (3).

14. Agencement selon l'une des revendications 1 à 13, **caractérisé en ce qu'**il est prévu un élément de liaison (7), de préférence sous la forme d'un oeillet, d'une bride, d'une roue dentée ou d'un pas de vis (8), sur le côté de l'élément d'application de force (4) tourné vers l'autre composant (3).
